(19) Europäisches Patentamt
European Patent Office
Office européen des brevets

(11) EP 4 650 385 A1

(12) EUROPÄISCHE PATENTANMELDUNG

(43) Veröffentlichungstag:
**19.11.2025 Patentblatt 2025/47**

(21) Anmeldenummer: **24176573.4**

(22) Anmeldetag: **17.05.2024**

(51) Internationale Patentklassifikation (IPC):
***C08G 77/10*** *(2006.01)* ***C08G 77/12*** *(2006.01)*
***C08L 83/04*** *(2006.01)*

(52) Gemeinsame Patentklassifikation (CPC):
(C-Sets verfügbar)
**C08G 77/12; C08G 77/10; C08L 83/04;**
C08G 77/04; C08G 77/045 (Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Evonik Operations GmbH**
**45128 Essen (DE)**

(72) Erfinder:
- **KNOTT, Wilfried**
  **45355 Essen (DE)**
- **DUDZIK, Horst**
  **4532655 Essen (DE)**

(74) Vertreter: **Evonik Patent Association**
**c/o Evonik Industries AG**
**IP Management**
**Postcode 84/339**
**Rodenbacher Chaussee 4**
**63457 Hanau (DE)**

# (54) HERSTELLUNG SÄUREFREIER WASSERSTOFFSILOXANÄQUILIBRATE

(57) Die Erfindung betrifft ein Verfahren zur Herstellung säurefreier Wasserstoffsiloxanäquilibrate, wobei man eine Mischung umfassend mindestens zwei verschiedene Siloxane, die zusammen betrachtet über Dimethylhydrogensiloxygruppen, Methylhydrogensiloxygruppen, Dimethylsiloxygruppen sowie vorzugsweise über Trimethylsiloxygruppen verfügen, mit einem makrovernetzten, wasserhaltigen und Sulfonsäuregruppen enthaltenden Kationenaustauscherharz in Kontakt bringt und unter Umlagerung der SiOSi-Bindungen solange reagieren lässt, bis dass das auf diese Weise hergestellte säurefreie Wasserstoffsiloxanäquilibrat bei einer Edelmetall-katalysierten, hydrosilylierenden Anlagerung an mindestens einen ungesättigten Polyether, der einen nach der Guo'schen Inkrementmethode errechneten, arithmetisch gemittelten HLB-Wert >9,0 aufweist, ein bei T = 25°C klares Anlagerungsprodukt liefert, wobei man die Umlagerung der SiOSi-Bindungen im Temperaturbereich von 10 bis 50°C, vornimmt, mit der Maßgabe, dass das Kationenaustauscherharz dadurch charakterisiert ist, dass das Produkt P aus dessen spezifischer Oberfläche und dessen mittlerem Porendurchmesser $P \geq 2{,}2 \times 10^{-3} m^3/kg$ und die spezifische Oberfläche $A \geq 35\ m^2/g$ betragen und dass es zudem einen Wassergehalt von 6 bis 16 Gewichtsprozent bezogen auf das Gewicht des Kationenaustauscherharzes aufweist.

EP 4 650 385 A1

(52) Gemeinsame Patentklassifikation (CPC): (Forts.)

C-Sets
**C08L 83/04, C08L 83/00, C08K 5/549;**
**C08L 83/04, C08L 83/00, C08L 83/00**

## Beschreibung

Die Erfindung liegt auf dem Gebiet der Silikonchemie und betrifft insbesondere ein Verfahren zur Herstellung säurefreier, unverzweigter Wasserstoffsiloxanäquilibrate.

Wasserstoffsiloxane, das heißt, SiH-Gruppen aufweisende Siloxane spielen insbesondere als Äquilibrate eine bedeutende Rolle als Vorprodukte beispielsweise für deren Weiterverarbeitung zu Polyethersiloxanen, Silikonacrylaten, Silikonquats, Silikonwachsen und zahlreichen weiteren Derivaten.

Die Äquilibrierung von Siloxanen ist aus dem Stand der Technik grundsätzlich bekannt. Neben den ältesten, homogenkatalytisch geführten Äquilibrierverfahren haben in den vergangenen Jahren zunehmend heterogenkatalytisch gestaltete Prozesse Eingang in die industrielle Silikonherstellung genommen, die sich der Festphasenkatalysatoren bedienen.

Ein wesentlicher Vorteil des sauren Festphasenkatalysators bei der Herstellung von Wasserstoffsiloxanen liegt zum Beispiel darin, dass man die flüssige Siloxanphase ohne aufwendige Nachbehandlung, insbesondere ohne die Neutralisation einer sonst üblicherweise eingesetzten Homogensäure mit anschließender filtrierender Abtrennung des gebildeten Salzes, von dem sauren Festphasenkatalysator abtrennen kann.

Unter den zur Äquilibrierung von Wasserstoffsiloxanen eingesetzten Festphasenkatalysatoren kommt hierbei den makroporösen, sulfonsauren Polystyrolharzen eine besondere Bedeutung zu. Diese erweisen sich insbesondere als geeignet zur Äquilibrierung von Siloxansystemen, die Methylhydrogensiloxygruppen tragende Siloxankomponenten besitzen.

Dieser Zielsetzung folgend, richtet sich z.B. die Lehre der WO 2010/031654 A1 insbesondere auf die Äquilibrierung von Poly(methylhydrogen)-polydimethylsiloxan-Copolymeren an einem wasserhaltigen Kationenaustauscherharz, wobei man ein als Ausgangsmaterial benutztes Organosiloxan oder ein Organosiloxangemisch bei einer Temperatur von 10 °C bis 120 °C mit einem makrovernetzten, wasserhaltigen und Sulfonsäuregruppen enthaltenden Kationenaustauscherharz in Kontakt bringt und die erhaltenen äquilibrierten Organosiloxane isoliert. Das gemäß WO 2010/031654 A1 eingesetzte, wasserhaltige Kationenaustauscherharz ist dadurch charakterisiert, dass das Produkt P aus dessen spezifischer Oberfläche und dessen mittlerem Porendurchmesser $P \geq 2{,}2 \times 10^{-3} m^3/kg$ und die spezifische Oberfläche $A > 35\ m^2/g$ betragen und dass es zudem einen Wassergehalt von 8 bis 25 Gewichtsprozent bezogen auf das Gewicht des Ionenaustauscherharzes aufweist. Um einer Wasserverarmung des sulfonsauren Kationenaustauscherharzes zu begegnen, lehrt die WO 2010/031654 A1, dass es vorteilhaft sein kann, das Reaktandensystem mit definierten Mengen an Wasser zu versetzen.

In WO 2010/074831 A1 wird ein Verfahren zur Herstellung von Siloxanen, umfassend das Umsetzen von mindestens zwei Siloxanen in Gegenwart eines Ionenaustauscherharzkatalysators, der 6 bis 19 Gew.-% Wasser umfasst, beschrieben, wobei dort vorzugsweise mindestens eines der Siloxane mindestens ein siliziumgebundenes Wasserstoffatom umfasst, und wobei vorzugsweise mindestens eines der Siloxane Poly(methyl)hydrogensiloxan oder ein cyclisches Siloxan ist. Insbesondere wird dort das Reagierenlassen von mindestens zwei Siloxanen an einem wasserhaltigen Ionenaustauschharzkatalysator beschrieben, wobei mindestens ein Siloxan ein siliciumgebundenes Wasserstoffatom umfasst und wobei man den Ionenaustauschharzkatalysator nach dem Reagierenlassen zurückgewinnt und durch Hinzufügen von Wasser zu dem Ionenaustauschharzkatalysator eine Wasserbeladung von 6 bis 19 Gewichtsprozent bezogen auf das Trockengewicht des Ionenaustauschharzkatalysators einstellt und danach wieder mindestens zwei Siloxane in Gegenwart dieses Ionenaustauschharzkatalysators reagieren lässt. Als Reaktanden werden in den Beispielen der WO 2010/074831 A1 Octamethylcyclotetrasiloxan und Tetramethyldisiloxan gewählt und man betrachtet dort den gaschromatographisch bestimmten Gehalt von Octamethylcyclotetrasiloxan ($D_4$) in der Siloxanmatrix am Ende der Reaktion als Indikator für eine erfolgte Gleichgewichtseinstellung. Außerdem wird jeweils ein vorgegebener SiH-Gehalt der Reaktionsmischung nur zu Beginn der Reaktion referiert. Die WO 2010/074831 A1 macht jedoch keine Angaben zu dem SiH-Gehalt der Reaktionsmischung am Ende einer jeden Umsetzung. Neben dem über Gaschromatographie-bestimmten $D_4$-Gehalt ist jedoch der SiH-Gehalt des Reaktionsproduktes von noch größerer Bedeutung, da alle üblichen, gerüstaufbauenden Folgereaktionen (wie zum Beispiel die Hydrosilylierung oder auch dehydrogenative Umsetzungen) zur Festlegung der jeweiligen Stöchiometrie diese Bezugsgröße benötigen.

DE 102014211680 A1 beschreibt die Herstellung von Siloxanen, vorzugsweise unter regenerationsfreier Weiterverwendung der Ionenaustauscherharze, umfassend das Reagierenlassen von mindestens zwei Siloxanen am sulfonsauren Kationenaustauscherharz, wobei mindestens ein OHfunktionelles Siloxan eingesetzt wird. In den Beispielen der DE 102014211680 A1 wurden $\alpha,\omega$-Dihydrogenpolydimethylsiloxan und Dekamethylcyclopentasiloxan eingesetzt. Im Rahmen der Offenbarung wird dort gezeigt, dass sich eine Vielzahl sulfonsaurer Kationenaustauscherharze für die unter SiOSi-Umlagerung verlaufende Äquilibrierung von $\alpha,\omega$-Dihydrogenpolydimethylsiloxanen eignet. Dabei die Breite aller sauer äquilibrierbaren Siloxane beanspruchend, zeigt die Schrift jedoch nicht, wie man zu äquilibrierten, das heißt, möglichst vollständig gleichverteilten SiH-Siloxanen gelangt, die sowohl kettenterminale als auch seitständige SiH-Funktionen aufweisen.

Die SiH-Funktion erhaltende Äquilibrierung von sowohl Dimethylhydrogensiloxygruppen-tragenden als auch

Methylhydrogensiloxyeinheiten-tragenden Siloxanen in der Äquilibriermatrix stellt die bis heute größte Herausforderung dar, so dass Supersäuren wie die Perfluoralkansulfonsäuren, insbesondere Trifluormethansulfonsäure und Perfluorbutansulfonsäure nach wie vor die bevorzugten Homogenkatalysatoren für die industrielle Äquilibrierung dieser besonderen Wasserstoffsiloxane sind.

Allerdings ist absehbar, dass die Möglichkeit zur Nutzung der bereits beschriebenen, hoch effektiven Homogenkatalysatoren nur noch bis zu einem begrenzten Zeithorizont möglich sein wird. Die Europäische Chemikaliengesetzgebung betreibt aktuell die Zurückdrängung von perfluorierten Alkansulfonsäuren, so dass man derzeit davon ausgehen kann, dass beispielsweise die in der Silikonherstellung bewährten Homogenkatalysatoren wie Trifluormethansulfonsäure und Perfluorbutansulfonsäure zukünftig nicht mehr zur Verfügung stehen werden.

Eine Schwierigkeit bei der Äquilibrierung von Dimethylhydrogensiloxygruppen tragenden, vorzugsweise unverzweigten, jedoch auch noch Methylhydrogensiloxygruppen und Dimethylsiloxygruppen aufweisenden Wasserstoffsiloxanen liegt darin, eine weitestgehend statistische Gleichverteilung von SiH-Funktionen entlang der Oligomerkette zu erreichen, ohne dass dabei zu viele von den empfindlichen Dimethylhydrogen-siloxygruppen durch dehydrogenative Prozesse verloren gehen.

Im Gegensatz zu perfluorierten Supersäuren ist die wirksame Azidität sulfonsaurer Ionenaustauscherharze in SiH-Gruppen enthaltenden Siloxanmatrices deutlich niedriger, so dass es beim Einsatz von sulfonsauren Ionenaustauscherharzen sehr darauf ankommt, die geeigneten Reaktionsparameter für das jeweilige Äquilibriersystem zu finden.

Die benötigte Azidität richtet sich dabei konkret nach der zu lösenden Äquilibrieraufgabe, das heißt nach der Struktur des angestrebten Wasserstoffsiloxans. Die Synthese von $\alpha,\omega$-Dihydrogenpolydimethylsiloxanen erhebt dabei die geringsten Ansprüche an die vom Katalysator ausgeübte Azidität, das heißt seiner Möglichkeit, Protonen bereitzustellen. Setzt man zum Beispiel ein Gemisch bestehend aus Octamethylcyclotetrasiloxan und Tetramethyldisiloxan unter saurer Katalyse zu $\alpha,\omega$-Dihydrogen-polydimethylsiloxanen um, so benötigt man für die Öffnung eines Octamethylcyclotetrasiloxan-Moleküls eingeleitet durch Protonierung des Sauerstoffatoms in einer darin enthaltenen SiOSi-Bindung theoretisch nur ein Proton. Ebenfalls nur ein Proton wird für die Öffnung der im Tetramethyldisiloxanmolekül enthaltenen SiOSi-Bindung theoretisch benötigt. Die Einstellung der Oligomerkettenverteilung verlangt zudem eine vergleichsweise geringe protische Aktivität.

Vollkommen anders liegen die Verhältnisse jedoch bei denjenigen copolymeren Siloxanen, die Methylhydrogensiloxyeinheiten ($D^H$-Einheiten) und Dimethylsiloxy-Einheiten (D-Einheiten) neben Trimethylsilylgruppen (M-Einheiten) enthalten und die beispielsweise aus Poly(methylhydrogen)siloxan und Octamethylcyclotetrasiloxan und Hexamethyldisiloxan unter saurer Katalyse hergestellt werden können. Für die Öffnung eines Octamethylcyclotetrasiloxan-Moleküls nach Protonierung des Sauerstoffatoms in einer der 4 darin enthaltenen SiOSi-Bindungen wird theoretisch nur ein Proton benötigt. Gleichfalls nur ein Proton ist für die Einleitung der Öffnung der im Hexamethyldisiloxan-Molekül enthaltenen SiOSi-Bindung theoretisch erforderlich. Auch die molekulare Zerlegung des Poly(methylhydrogen)siloxans benötigt pro Siloxanylbindung (SiOSi-Bindung) theoretisch jeweils nur 1 Proton. Um jedoch eine statistische Verteilung der Methylhydrogensiloxy-Einheiten entlang der Oligomerketten des angestrebten Poly(methylhydrogensiloxan)-Polydimethylsiloxan-Copolymers im Zeitfenster der Reaktion zu erreichen, werden ungleich mehr Protonen pro Volumen Reaktionsmasse benötigt, da nur ein nahezu zeitgleiches Aufbrechen und Neuknüpfen vieler SiOSi-Bindungen ein Copolymer hervorbringt, das keine Kumulation(en) von Methylhydrogensiloxyeinheiten (= $D^H$-Einheiten) innerhalb der Siloxanoligomerketten aufweist.

Als größte Herausforderung ist die gezielte säurekatalysierte Herstellung von Dimethylhydrogensiloxy-Einheiten, Methylhydrogensiloxy-Einheiten und Dimethylsiloxyeinheiten sowie bevorzugt noch Anteilen an Trimethylsiloxyendgruppen aufweisenden Wasserstoffsiloxanen zu betrachten. Hier gilt es, die weitestmöglich statistische Verteilung der Methylhydrogensiloxy-Einheiten entlang der Oligomerketten zu gewährleisten, aber zugleich sicherzustellen, dass speziell die empfindlichen Dimethylhydrogensiloxygruppen keinen relevanten Wasserstoffverlust erleiden.

Speziell diesen Typ von Wasserstoffsiloxan offenbarend, beschäftigt sich die Lehre der DE 102005001039 A1 mit der Einstellung eines geeigneten Äquilibriergleichgewichtes an speziellen sulfonsauren Kationenaustauscherharzen, jedoch ohne dass dabei eine statistische Verteilung der SiH-Funktionen im gewonnenen Wasserstoffsiloxan erreicht wird.

Konkret beschreibt die DE 102005001039 A1 dabei auch ein Verfahren zur Herstellung von SiH-Gruppen enthaltenden Äquilibrierungsprodukten von Organosiloxanen durch Umlagerung der Siloxanbindung an einem sulfonsauren Kationenaustauscherharz, wobei man ein als Ausgangsmaterial benutztes Organosiloxan oder ein Organosiloxangemisch und Wasserstoffsiloxane bei einer Temperatur von 10°C bis 120°C mit einem makrovernetzten, Sulfonsäuregruppen enthaltenden Kationenaustauscherharz in Kontakt bringt und die so erhaltenen Organosiloxane isoliert, indem man ein Kationenaustauscherharz einsetzt, dessen Produkt P aus dessen spezifischer Oberfläche und dessen mittlerem Porendurchmesser $P < 2{,}2$ $P < 1 \times 10^{-3}$ $m^3$ /kg und die spezifische Oberfläche $A < 50$ $m^2$ /g betragen.

Zur Gewinnung abhäsiver Beschichtungsmassen verweist die DE 102005001039 A1 auf die Herstellung von (Meth)Acrylatgruppen enthaltenden Organopolysiloxanen, die erhalten werden durch die dehydrogenative Umsetzung von (meth)acrylierten Alkoholen wie zum Beispiel Hydroxyethylacrylat mit diesen, im Wesentlichen von SiH-Domänen durchsetzten Organosiloxanen und $B(CeF_5)_3$ als Katalysator.

Zu Vergleichszwecken zieht die DE 102005001039 A1 Wasserstoffsiloxane heran, die unter Verwendung von Decamethylcyclopentasiloxan ($D_5$), Poly(methyl)wasserstoffsiloxan und einem $\alpha,\omega$-Dihydrogenpolydimethylsiloxan ($HSiMe_2$-$[SiMe_2O]_8$-$SiMe_2H$) mit 0,1% Trifluormethansulfonsäure versetzt und für 6 Stunden bei 30°C unter ständigem Rühren äquilibriert und anschließend mit $Na_2CO_3$ neutralisiert wurden.

Diese unter Trifluormethansulfonsäure-Katalyse gewonnenen, statistisch gleichverteilten Wasserstoffsiloxane sowie ihre (Meth)Acrylatgruppen-tragenden Derivate sind jedoch für die Zielstellung der DE 102005001039 A1 nicht geeignet.

Da gemäß der dort vertretenen Lehre eine statistische Verteilung der SiH-Funktionen im gewonnenen Wasserstoffsiloxan nicht angestrebt ist, kann man der DE 102005001039 A1 keine Handlungsanweisung entnehmen, die exakt vorgibt, an welchen Kationenaustauscherharzen und unter welchen Reaktionsbedingungen die Herstellung der sonst nur unter Trifluormethansulfonsäure-Katalyse zugänglichen, statistisch gleichverteilten Wasserstoffsiloxane diesen Strukturtyps möglich ist.

EP 1 439 200 A1 beschreibt ein Verfahren zur Herstellung von Äquilibrierungsprodukten von Organosiloxanen durch Umlagerung der Siloxanbindung an einem sulfonsauren Kationenaustauscherharz, wobei man ein als Ausgangsmaterial benutztes Organosiloxan oder ein Organosiloxangemisch bei einer Temperatur von 10 °C bis 120 °C mit einem makrovernetzten, Sulfonsäuregruppen enthaltenden Kationenaustauscherharz in Kontakt bringt und die erhaltenen äquilibrierten Organosiloxane isoliert, wobei man ein Kationenaustauscherharz einsetzt, dessen Produkt P aus deren spezifischer Oberfläche und deren mittlerem Porendurchmesser $P \geq 2{,}2 \times 10^3$ $m^3$/kg und die spezifische Oberfläche $A \geq 35$ $m^2$/g betragen. In EP 1 439 200 A1 wird als Ausgangsmaterial insbesondere ein Gemisch aus Hexamethyldisiloxan, Poly(methyl)wasserstoffsiloxan und Siloxancyclen verwendet. Beispielhaft wird dort u.a. die Herstellung eines Wasserstoffsiloxans beschrieben, wobei unter Einsatz von Decamethylcyclopentasiloxan, Poly(methyl)wasserstoffsiloxan und Hexamethyl-disiloxan bei einer Temperatur von 95 °C äquilibriert wurde. Die Auswertung kernmagnetischer Resonanzspektren kann den Schluss zulassen, dass die resultierenden Produkte überwiegend einzelne SiH-Segmente in statistischer Anordnung aufweisen.

Die Offenlegungsschrift DE 21 52 270 A beschreibt ein Verfahren zur Herstellung von Äquilibrierungsprodukten von Organosiloxanen durch Umlagerung der Siloxanbindung an einem Kationenaustauscherharz, wobei man als Ausgangsmaterial benutztes Organosiloxan oder ein Organosiloxangemisch bei einer Temperatur von etwa 10 °C bis etwa 100 °C durch eine Packung fließen lässt, die als Kationenaustauscherharz ein makrovernetztes, Sulfonsäuregruppen enthaltendes Kationenaustauscherharz mit einem durchschnittlichen Porenvolumen von wenigstens etwa 0,01 $cm^3$ enthält und die ausgeflossenen Organosiloxane isoliert. Es wird dort u.a. beschrieben, dass man ein Gemisch aus Methylhydrogensiloxan, Dimethylsiloxan und einem Organosiloxan aus der Gruppe Hexamethyldisiloxan und symetrisches Tetramethyldisiloxan verwenden kann. Es wird dort u.a. die Möglichkeit beschrieben, durch Äquilibrierung eines Gemisches bestehend aus Methylhydrogenpolysiloxan, Hexamethyldisiloxan und Siloxancyclen an der makrovernetzten Ionenaustauscherphase Amberlyst® 15 copolymere Dimethylsiloxan-poly(methyl)wasserstoffsiloxane herzustellen.

EP 2 628 763 A1 offenbart ein Verfahren zur Herstellung von verzweigten, olefinisch ungesättigte Gruppen und SiH-Gruppen aufweisenden Polysiloxanen, vorzugsweise unter Einsatz eines sauren Ionenaustauscherharzes, das Sulfonsäuregruppen aufweist.

Für die Herstellung der aus Dimethylhydrogensiloxy-Einheiten, Methylhydrogensiloxy-Einheiten und Dimethylsiloxyeinheiten sowie gegebenenfalls Anteilen an Trimethylsilyoxyendgruppen zusammengesetzten Wasserstoffsiloxane ist jedoch noch keine Anleitung zum technischen Handeln gegeben, da sie einerseits über die gegenüber SiH-Verlusten robusteren Methylhydrogensiloxy-Einheiten verfügen andererseits jedoch auch Dimethylhydrogensiloxy-Einheiten aufweisen, die selbst unter relativ moderaten Umsetzungsbedingungen bereits massive SiH-Verluste erleiden.

Vor diesem Hintergrund, lehrt nach Einschätzung der Erfinder keine der im Stande der Technik aufgeführten Schriften, wie man reproduzierbar und dabei unter weitestgehendem Erhalt insbesondere des aus den Dimethylhydrogensiloxygruppen stammenden Wasserstoffs unter Nutzung eines sulfonsauren Kationenaustauscherharzes äquilibrierte Wasserstoffsiloxane mit darin statistisch verteilten SiH-Gruppen herstellt, die sowohl über seitständiges SiH in Form von Methylhydrogensiloxygruppen als auch über Dimethylhydrogensiloxygruppen sowie Dimethylsiloxygruppen sowie bevorzugt über Anteile von Trimethylsiloxyendgruppen verfügen.

Diese rein statistisch-theoretische Betrachtung der für die Äquilibrierung solcher Siloxancopolymeren benötigten Azidität erfährt ihre experimentelle Untermauerung durch die Publikation von G. Sauvet, M. Moreau. G. Hélary, E. Daudet, P. Cancouet, "Functional polysiloxanes. I. Microstructure of poly-(hydrogenmethylsiloxane-co-dimethylsiloxane) s obtained by cationic copolymerization" in J. Polymer Science, Part A: Polymer Chemistry Vol. 38, 826-36 (2000), in der die Autoren (auf Seite 833, ibid.) zu der klaren Folgerung gelangen, dass eine Siloxanbindung (SiOSi) zwischen zwei $D^H$-Einheiten weniger reaktiv als diejenige zwischen zwei D-Einheiten ist, was unmittelbar die in der sauren Äquilibrierung involvierten Teilreaktionen wie Backbiting, Crosslinking und Azidolyse beeinflusst.

Die Kumulation von Methylhydrogensiloxygruppen ist weitestmöglich zu vermeiden, da sich die spätere Verwendungsfähigkeit der aus Wasserstoffsiloxan-Äquilibraten in Hydrosilylierungsreaktionen, insbesondere in solchen, bei denen mit Hilfe von Polyethergemischen Polyethersiloxane für anspruchsvolle tensidische Anwendungen gewonnen

werden, wie zum Beispiel als Stabilisator in Polyurethanschäumen, unmittelbar an das Strukturmerkmal von Copolymeren knüpft, deren Polyether-tragende Si-Atome möglichst statistisch, das heißt weitestmöglich voneinander isoliert, weil durch D-Einheiten voneinander getrennt, über die Oligomerketten verteilt sind.

Sauvet et al. (Seite 835, rechte Spalte, ibid.) gelangen in ihrer zuvor genannten Publikation zu der Aussage, dass die Kenntnis der Verteilung von D- und $D^H$-Einheiten in der Kette der Schlüssel zum Verständnis der Eigenschaften der (SiH)-Copolymeren an sich und noch viel mehr der Eigenschaften der daraus abgeleiteten, funktionalisierten Derivate ist. Sauvet et al. weisen auf den direkten Einfluss der Verteilung von D- und $D^H$-Einheiten in der Kette auf die Reaktionsgeschwindigkeit bei Hydrosilylierungsreaktionen hin.

In diesem Zusammenhang haben P. Cancouet, S. Pernin, G. Hélary, G. Sauvet in ihrem Artikel "Functional polysiloxanes. II. Neighboring effect in the hydrosilylation of poly(hydrogen-methylsiloxaneco-dimethylsiloxane)s by allylglycidylether" in J. Polymer Science, Part A: Polymer Chemistry, Vol. 38, 837-45 (2000) den Nachbargruppeneffekt bei der hydrosilylierenden Anlagerung von Allylglycidylether an Poly(methylhydrogensiloxan)-Polydimethylsiloxan-Copolymere untersucht und aufgezeigt, dass die Präsenz von Methylhydrogensiloxy-Diaden ($D^H$-$D^H$ ) zu einer beschleunigten Hydrosilylierung führt, während isolierte, das heißt von D-Einheiten umgebene $D^H$-Einheiten(D-$D^H$-D) eine langsamere Reaktionskinetik zeigen. Vor dem Hintergrund dieses Befundes ist dem Fachmann verständlich, dass die Mikrostruktur der Wasserstoffsiloxane insbesondere bei der Anlagerung von Polyethergemischen mit ihrer Bandbreite an Individualreaktivitäten einen maßgeblichen Einfluss auf die spätere Zielstruktur des PolyethersiloxanCopolymers nimmt.

Methoden zur Ermittlung der molekularen Feinstruktur in Wasserstoffsiloxanen sind bekannt. So benutzten G. Sauvet et al. in der bereits genannten Publikation J. Polymer Science, Part A: Polymer Chemistry Vol. 38, 826-36 (2000) insbesondere die hochauflösende $^{29}$Si-NMR-Spektroskopie zum Nachweis von Diaden, Triaden, Pentaden, etc., das heißt, von Kumulationen von Methylhydrogensiloxygruppen in einem Poly(methylhydrogensiloxan)-Polydimethylsiloxan-Copolymer.

Bisher hat die NMR-Technik als prozessbegleitende Analysenmethode, speziell als Real-Time-Methode, jedoch keinen Platz in der industriellen Herstellung von Polyorganohydrogensiloxanen erlangt, was unter anderem an den Kosten für das zu installierende Equipment aber insbesondere auch an dem grundsätzlichen Problem liegt, Quellen extrem starker elektromagnetischer Strahlung wie NMR-Magneten und Messköpfe betriebssicher in explosionsgeschützten Produktionsanlagen unterzubringen.

Die Fragestellung einer prozessbegleitenden Analytik sucht die Lehre der WO 2022/132446 A1 zu adressieren, indem dort speziell durch Beispiele gestützt, schwingungsspektroskopische Methoden wie die Infrarot- und die Ramanspektroskopie zur Ermittlung direkt miteinander verknüpfter ($D^H$-$D^H$)- und voneinander getrennter (D-$D^H$-D)-Strukturen in der säurekatalysierten Äquilibrierung von Siloxanen, die als D-Quelle und Siloxanen die als $D^H$-Quelle fungieren zur Beurteilung des erzielten Verteilungsgrades herangezogen werden. Auf die Härtungsgeschwindigkeit in Siloxanelastomeren abstellend, wird ein direkter Zusammenhang zwischen der schwingungsspektroskopisch ermittelten Konzentration entkoppelter, das heißt statistisch verteilter SiH-Gruppen und der Härtungskinetik bei Verwendung des jeweiligen SiH-Copolymeren gesehen. So benötigt (ibid. Seite 18, Tabelle 3) ein SiH-Copolymer aus Batch 1 nach 3 Stunden Äquilibrierzeit und einer SiH-IR-Intensität von 2,08 eingebracht in ein Elastomersystem 144,3 Sekunden zur Durchhärtung, während ein aus Batch 7 stammendes SiH-Copolymer nach 16 Stunden Äquilibrierzeit und mit einer gemessenen SiH-IR-Intensität von 3,32 bereits nach nur 61,4 Sekunden zur Härtung des Elastomersystems führt. Insbesondere als Zielprodukte die verschiedenartigsten Härtungssysteme (Kondensations- und/ oder Hydrosilylierungs-härtbare Produkte) ansteuernd, soll die in der WO 2022/132446 A1 dargestellte Methode helfen, Chargenzeiten zu minimieren und gleichzeitig eine höhere statistische Uniformität des äquilibrierten SiH-Copolymers zu erreichen.

Vorzugsweise mit dem Blick auf anspruchsvolle Silikonpolyether-Copolymere gerichtet, die zum Beispiel Eingang in Polyurethanhartschaumstabilisatoren nehmen können, beschäftigt sich die hier vorliegende Erfindung u.a. mit der Bereitstellung bestimmter säurefreier Wasserstoffsiloxanäquilibrate und vorzugsweise u.a. auch mit der Detektion der weitestgehend statistischen Gleichverteilung von SiH-Funktionalität in sowohl über seitständiges SiH in Form von Methylhydrogensiloxygruppen als auch über Dimethylhydrogensiloxygruppen sowie Dimethylsiloxygruppen sowie vorzugsweise noch über Anteile von Trimethylsiloxygruppen verfügenden Wasserstoffsiloxanen. Diese Bereitstellung bestimmter säurefreier Wasserstoffsiloxanäquilibrate und vorzugsweise auch Detektion der weitestgehend statistischen Gleichverteilung von SiH-Funktionalität war die konkrete Aufgabe der vorliegenden Erfindung. Statistische Gleichverteilung von SiH-Funktionalität bedeutet im Sinne der Erfindung, dass alle im Reaktionssystem vorhandenen Methylhydrogensiloxygruppen so über die Ketten des Wasserstoffsiloxanäquilibrats verteilt sind, dass es gemittelt über die gesamte Kettenlängenverteilung des Wasserstoffsiloxans hinweg vorzugsweise weder zu einer unterbesetzten noch überbesetzten Präsenz von Methylhydrogensiloxygruppen kommt und dass vorzugsweise die Kumulation, das heißt, die benachbarte Anordnung von Methylhydrogensiloxygruppen in den Siloxanketten weitestgehend vermieden wird.

Erstaunlicherweise wurde jetzt von den Erfindern gefunden, dass man besagte säurefreie Wasserstoffsiloxanäquilibrate an einem makrovernetzten, wasserhaltigen und Sulfonsäuregruppen enthaltenden Kationenaustauscherharz herstellen kann, wobei dieses Kationenaustauscherharz dadurch charakterisiert ist, dass das Produkt P aus dessen spezifischer Oberfläche und dessen mittlerem Porendurchmesser $P \geq 2{,}2 \times 10^{-3} m^3/kg$ und die spezifische Oberfläche $A \geq$

35 $m^2/g$ betragen und dass es zudem einen Wassergehalt von 6 bis 16 Gewichtsprozent, vorzugsweise von 8 bis 12 Gewichtsprozent bezogen auf das Gewicht des Kationenaustauscherharzes aufweist.

Erstaunlicherweise wurde von den Erfindern weiterhin gefunden, dass der Fachmann ohne die zuvor beschriebene, aufwendige instrumentelle Analytik einsetzen zu müssen, bereits durch bloße visuelle Prüfung ausgewählter Polyethersiloxane die sichere Bewertung vornehmen kann, ob die durchgeführte Äquilibrierungsreaktion des jeweiligen Wasserstoffsiloxangemischs zu einem weitestgehend statistisch gleichverteilten oder jedoch - auf der Wasserstoffsiloxanstufe - zu einem von Methylhydrogensiloxy-Domänen durchsetzten Copolymer geführt hat.

Diese Befunde sind überraschend und für den Fachmann nicht vorhersehbar, denn aus älterer Patentliteratur, die sich mit dem äquilibrierenden Einbau von Dimethylhydrogensiloxygruppen in andersartig strukturierte Siloxangerüste beschäftigt, ist bekannt, dass man zum Teil erhebliche Wasserstoffeinbußen Si-gebundenen Wasserstoffs (SiH) verzeichnet, wenn man Kationenaustauscherharze genau diesen Typs zu diesem Zweck einsetzt. So zeigen z.B. die Ausführungsbeispiele 2, 3 und 4 der EP 2 628 763 A1 sehr deutlich die SiH-Einbußen, die ein auf der Verwendung von Dimethylhydrogengruppen beruhendes Äquilibriersystem an einem sulfonsauren Kationenaustauscherharz (Lewatit® K 2621) erleidet. Dort lässt man das sulfonsaure Harz mit 10% Wassergehalt für 6 Stunden bei 40°C auf ein Gemisch bestehend aus einem verzweigten und einem linearen Wasserstoffsiloxan, die jeweils beide die empfindlichen Dimethylhydrogensiloxygruppen enthalten, einwirken und isoliert Siloxane, die nur noch 66%, 82% und 75% der ursprünglich eingesetzten SiH-Menge aufweisen.

Die Lösung der zuvor genannten konkreten Aufgabe wird durch den Gegenstand der vorliegenden Erfindung ermöglicht. Gegenstand der vorliegenden Erfindung ist ein Verfahren zur Herstellung säurefreier Wasserstoffsiloxanäquilibrate folgender mittlerer Strukturformel:

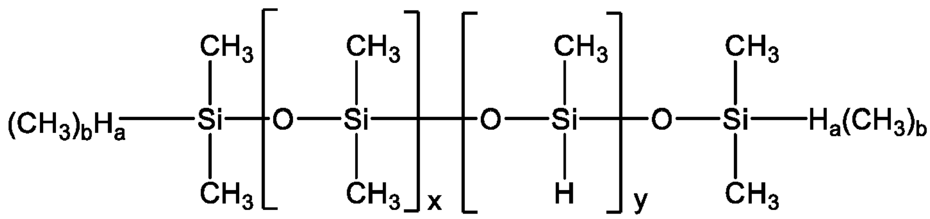

mit

$3 \leq x \leq 100$, bevorzugt $30 \leq x \leq 80$,
$1 \leq y \leq 30$, bevorzugt $2 \leq y \leq 10$,
$0{,}4 \leq a \leq 1{,}0$ bevorzugt $0{,}6 \leq a \leq 0{,}95$,
$0 \leq b \leq 0{,}6$, bevorzugt $0{,}05 \leq b \leq 0{,}4$,
$a + b = 1$,
besonders bevorzugt ist $x + y + 2 \geq 13$,
wobei man eine Mischung umfassend mindestens zwei verschiedenen Siloxane, die zusammen betrachtet über Dimethylhydrogensiloxygruppen, Methylhydrogensiloxygruppen, Dimethylsiloxygruppen sowie vorzugsweise über Trimethylsiloxygruppen verfügen,
mit einem makrovernetzten, wasserhaltigen und Sulfonsäuregruppen enthaltenden Kationenaustauscherharz in Kontakt bringt und unter Umlagerung der SiOSi-Bindungen solange reagieren lässt, bis dass das auf diese Weise hergestellte säurefreie Wasserstoffsiloxanäquilibrat bei einer Edelmetall-katalysierten, hydrosilylierenden, Anlagerung an mindestens einen ungesättigten Polyether, der einen nach der Guo'schen Inkrementmethode errechneten, vorzugsweise arithmetisch gemittelten, HLB-Wert >9,0 aufweist, ein bei T = 25°C klares Anlagerungsprodukt liefert, wobei man die Umlagerung der SiOSi-Bindungen im Temperaturbereich von 10 bis 50°C, vornimmt, mit der Maßgabe, dass das makrovernetzte, wasserhaltige und Sulfonsäuregruppen enthaltende Kationenaustauscherharz dadurch charakterisiert ist, dass das Produkt P aus dessen spezifischer Oberfläche und dessen mittlerem Porendurchmesser $P \geq 2{,}2 \times 10^{-3} m^3/kg$ und die spezifische Oberfläche $A \geq 35\ m^2/g$ betragen und dass es zudem einen Wassergehalt von 6 bis 16 Gewichtsprozent bezogen auf das Gewicht des Kationenaustauscherharzes aufweist.

Es ist besonders bevorzugt, wenn man die Umlagerung der SiOSi-Bindungen im Temperaturbereich von 30°C bis 40°C vornimmt.

Vorzugsweise wird die Umlagerung der SiOSi-Bindungen in einem Zeitraum von 4 bis 10 Stunden, bevorzugt 5 bis 8 Stunden durchgeführt.

Vorzugsweise wird das erfindungsgemäße Verfahren, insbesondere bevorzugt die Umlagerung der SiOSi-Bindungen, bei einem Druck bevorzugt von 800 mbar bis 1200 mbar, besonders bevorzugt von 950 mbar bis 1100 mbar durchgeführt.

Es ist bevorzugt, wenn das makrovernetzte, wasserhaltige und Sulfonsäuregruppen enthaltende Kationenaustauscherharz sich dadurch auszeichnet, dass das Produkt P aus dessen spezifischer Oberfläche und dessen mittlerem Porendurchmesser $P \geq 2{,}3 \times 10^{-3} m^3/kg$, weiter bevorzugt $\geq 2{,}4 \times 10^{-3} m^3/kg$ ist.

Vorzugsweise weist das makrovernetzte, wasserhaltige und Sulfonsäuregruppen enthaltende Kationenaustauscherharz einen mittleren Porendurchmesser von wenigstens 65 nm auf.

Erfindungsgemäß wird in dem Verfahren zur Herstellung säurefreier Wasserstoffsiloxanäquilibrate eine Mischung umfassend mindestens zwei verschiedene Siloxane eingesetzt, die zusammen betrachtet über Dimethylhydrogensiloxygruppen, Methylhydrogensiloxygruppen, Dimethylsiloxygruppen sowie vorzugsweise über Trimethylsiloxygruppen verfügen.

Die Mischung, umfassend mindestens zwei verschiedenen Siloxane, enthält demnach SiHfunktionelles Siloxan. SiH-funktionelle Siloxane sind Siloxane, die mindestens eine SiH-Funktion, d.h. eine oder mehr als eine SiH-Funktion, aufweisen.

Im Rahmen der vorliegenden Erfindung sind diejenigen Dimethylsiloxy- und Methylhydrogensiloxygruppen aufweisenden Siloxane, die Anteile an Trimethylsiloxygruppen aufweisen, besonders bevorzugt einsetzbar, da man zu ihrer Herstellung vorzugsweise auf das in ausreichenden, technischen Mengen verfügbare Poly(methylhydrogen)siloxan zurückgreifen kann, das an seinen Kettentermini Trimethylsiloxy-endverschlossen ist.

Siloxane, wie zum Beispiel 2,4,6,8-Tetramethylcyclotetrasiloxan ($D_4^H$), die gemäß der erfindungsgemäßen Lehre zur Bereitstellung von Methylhydrogensiloxygruppen geeignet sind, sind zwar zu den industriell weniger verfügbaren Spezialchemikalien zu rechnen, aber ebenfalls bevorzugt einsetzbar.

Vorzugsweise können alle mindestens eine SiH-Funktion aufweisenden Siloxane, bevorzugt solche, bei denen die SiH-Funktionen rein endständig, rein seitenständig oder gemischt end- und seitenständig im Siloxan angeordnet sind, eingesetzt werden.

Vorzugsweise können als SiH-funktionelle Siloxane z. B. 1,1,1,3,5,5,5-Heptamethyltrisiloxan und/ oder höhere Homologe in Gestalt der Trimethylsiloxy-terminierten, linearen Poly(methyl-hydrogen)siloxane, wie beispielsweise HMS-993 der Firma Gelest Inc. (Firma Gelest Inc. in Morrisville, Pennsylvania, USA), des Weiteren z.B. lineare Polydimethylmethylhydrogensiloxancopolymere, wie beispielsweise HMS-031 und/oder HMS-071 der Firma Gelest Inc., des Weiteren z.B. lineare $\alpha,\omega$-Dihydrogen-polydimethylsiloxane, wie beispielsweise 1,1,3,3-Tetramethyldisiloxan, 1,1,3,3,5,5-Hexamethyltrisiloxan und/oder höhere Homologe wie beispielsweise DMS HM15, DMS-H03, DMS-H25, DMS-H31 und/oder DMS-H41 der Firma Gelest Inc., des Weiteren z.B. zyklische Poly(methylhydrogen)siloxane, wie beispielsweise Tetramethylcyclotetrasiloxan und/oder Pentamethylcyclopentasiloxan, des Weiteren z.B. zyklische Polydimethylmethylhydrogensiloxancopolymere, wie beispielsweise Heptamethylcyclotetrasiloxan und/oder Nonamethylcyclopentasiloxan, oder beliebige Mischungen davon eingesetzt werden.

Besonders bevorzugt können als SiH-funktionelle Siloxane Poly(methylhydrogen)siloxane, 1,1,3,3-Tetramethyldisiloxan, DMS-H03, HMS-993 (jeweils Firma Gelest Inc.) und/oder Pentamethylcyclopentasiloxan eingesetzt werden.

Vorzugsweise können als SiH-Funktion-freie Siloxane z. B. lineare Polydimethylsiloxane, wie beispielsweise Hexamethyldisiloxan oder aber z.B. cyclische Polydimethylsiloxane, wie beispielsweise Octamethylcyclotetrasiloxan und/oder Decamethylcyclopentasiloxan, eingesetzt werden, wobei Hexamethyldisiloxan und/oder Decamethylcyclopentasiloxan besonders bevorzugt sind.

Insbesondere ist es bevorzugt, wenn die Mischung umfassend mindestens zwei verschiedenen Siloxane, die zusammen betrachtet über Dimethylhydrogensiloxygruppen, Methylhydrogensiloxygruppen, Dimethylsiloxygruppen sowie vorzugsweise über Trimethylsiloxygruppen verfügen, mindestens ein $\alpha,\omega$-Dihydrogenpolydimethylsiloxan sowie mindestens ein Poly(methylhydrogen)-siloxan, vorzugsweise mindestens ein Trimethylsiloxygruppen endverschlossenes Poly(methyl-hydrogen)siloxan, umfasst. Wenn die eingesetzte Siloxan-Mischung zusätzlich mindestens ein cyclisches Siloxan enthält, vorzugsweise ausgewählt aus der Gruppe bestehend aus Octamethylcyclotetrasiloxan ($D_4$), Dekamethylcyclopentasiloxan ($D_5$) und Dodekamethylcyclohexasiloxan ($D_6$), so ist das besonders bevorzugt.

Es ist bevorzugt, die zuvor gewonnenen Dimethylhydrogensiloxygruppen tragenden Poly(methylhydrogensiloxan)-Polydimethylsiloxan-Copolymere, vorzugsweise die säurefreien Wasserstoffsiloxanäquilibrate, unter den Bedingungen einer Edelmetall-katalysierten, Hydrosilylierung mit mindestens einem ungesättigten Polyether, vorzugsweise mit einem aus mindestens zwei ungesättigten Polyethern bestehenden Polyethergemisch reagieren zu lassen und visuell zu beurteilen, ob aus dieser Reaktion ein optisch klares Anlagerungsprodukt hervorgeht.

Der hierbei einzusetzende mindestens eine ungesättigte Polyether, vorzugsweise das aus mindestens zwei ungesättigten Polyethern bestehende Gemisch, weisen einen HLB-Wert von größer 9,0, berechnet nach dem von Guo et. al (Calculation of hydrophile-lipophile balance for polyethoxylated surfactants by group contribution method in J. Colloid Interface Sciences 298, (2006), 441-450) eingeführten Inkrementsystem, auf. Bei Einsatz mehrerer ungesättigter Polyether, d.h. bei Einsatz eines aus mindestens zwei ungesättigten Polyethern bestehenden Gemisches, ist der arithmetisch gemittelte HLB-Wert (HLB = hydrophile- lipophile balance) der eingesetzten ungesättigten Polyether > 9,0.

Vorzugsweise kann man für den Fall der aus verschiedenen Polyethern zusammengesetzten Polyethersiloxane

den arithmetisch gemittelten HLB-Wert hernehmen, indem man den molprozentualen Anteil ohne Überschuss eines jeden in der jeweiligen Polyethersiloxan-Rezeptur eingesetzten Polyethers mit dessen jeweils nach dem System von Guo berechneten HLB-Wert multipliziert und dann diese Ergebnisse für alle im Polyethersiloxan vertretenen Polyether aufaddiert.

Im Sinne der vorliegenden Erfindung zeigen trübe Anlagerungsprodukte (die Anlagerungsprodukte sind Polyethersiloxane) dabei die Präsenz von Domänen an, wohingegen klare Anlagerungsprodukte eine weitestgehend statistische Gleichverteilung belegen.

Diese Feststellung gilt für die von den sowohl über seitständiges SiH in Form von Methylhydrogensiloxygruppen als auch über Dimethylhydrogensiloxygruppen sowie Dimethylsiloxygruppen sowie vorzugsweise noch über Anteile von Trimethylsiloxygruppen verfügenden Wasserstoffsiloxane abgeleiteten Polyethersiloxane.

Die visuelle Bewertung kann auch herangezogen werden, wenn das zu bewertende Wasserstoffsiloxan z.B. für eine vollkommen andere hydrosilylierende Modifizierung als zum Beispiel der Umwandlung in ein Polyethersiloxan vorgesehen ist.

Es ist bevorzugt, dass man während des erfindungsgemäßen Verfahrens zur Herstellung säurefreier Wasserstoffsiloxanäquilibrate eine Probe des zu beurteilenden Wasserstoffsiloxans aus dem Reaktionsgemisch entnimmt, und diese unter den Bedingungen einer Edelmetall-katalysierten Hydrosilylierung mit mindestens einem ungesättigten Polyether, der einen nach der Guo'schen Inkrementmethode errechneten, arithmetisch gemittelten HLB-Wert >9,0 aufweist, umsetzt und nach visueller Überprüfung der Klarheit des erhaltenen Anlagerungsproduktes entscheidet, ob das Verfahren zur Herstellung säurefreier Wasserstoffsiloxanäquilibrate beendet werden kann.

Ist das erhaltene Anlagerungsprodukt klar, so eignet sich das jeweilige Wasserstoffsiloxan zur Weiterverarbeitung, zum Beispiel auch zu Lackadditiven und das Verfahren zur Herstellung säurefreier Wasserstoffsiloxanäquilibrate kann beendet werden.

Es ist bevorzugt, dass zur Beendigung des Verfahrens zur Herstellung säurefreier Wasserstoffsiloxanäquilibrate das in-Kontakt-bringen des Reaktionsgemisches mit dem makrovernetzten, wasserhaltigen und Sulfonsäuregruppen enthaltenden Kationenaustauscherharz unterbrochen wird, insbesondere unterbunden wird.

Ist das erhaltene Anlagerungsprodukt hingegen trüb, so kann z.B. das Verfahren zur Herstellung säurefreier Wasserstoffsiloxanäquilibrate vorzugsweise solange weiter fortgesetzt werden, bis bei dem zuvor genannten Vorgehen ein klares Anlagerungsprodukt erhalten wird.

Die visuelle Bewertung selbst lässt sich ohne Weiteres durch einfaches Betrachten einer Probe bei T = 25°C bewerkstelligen. Sie kann vorzugsweise mit einfachen Maßnahmen und zuverlässig zum Beispiel in einem präparativen Labor durchgeführt werden. Ein beispielhaftes Vorgehen zur visuellen Bewertung kann vorzugsweise wie folgt sein: Man füllt das zu beurteilende Anlagerungsprodukt bzw. Polyethersiloxan mit einer Schichtdicke von ca. 10 mm bei einer Temperatur von 25°C in ein durchsichtiges Probenglas mit flachem Boden, z.B. ein Becherglas oder z.B. ein Schnappdeckelglas und stellt dieses dann auf ein in der Schriftart Arial 12 in schwarzer Schrift bedrucktes, weißes Blatt Papier und liest dann durch das befüllte Glas hindurch den gedruckten Text. Wenn das Ablesen des Textes ohne Mühe und ohne wahrnehmbare Verzerrung gelingt, so sind das Anlagerungsprodukt bzw. Polyethersiloxan als klar und damit das zur Hydrosilylierung eingesetzte Wasserstoffsiloxan als erfindungsgemäß einwandfrei äquilibriert zu beurteilen.

Die visuelle Bewertung kann bevorzugt auch von einer Gruppe von mindestens 5, vorzugsweise mindestens 11 normalsichtigen Menschen durchgeführt werden. Die einfache Mehrheitsentscheidung der Gruppe kann dann vorzugsweise das Ergebnis festlegen. Die visuelle Bewertung durch eine Gruppe ermöglicht vorzugsweise eine ggf. erforderliche Kompensierung der Subjektivität der Wahrnehmung einer normalsichtigen Einzelperson.

Bevorzugt wird die Hydrosilylierung (d.h. die hydrosilylierende Anlagerung) in Gegenwart mindestens eines Edelmetallkatalysators durchgeführt, vorzugsweise ausgewählt aus Platin-, Rhodium-, Osmium-, Ruthenium-, Palladium-, Iridium-Komplexen und/oder Verbindungen, und/oder vorzugsweise ausgewählt aus den entsprechenden reinen Elementen oder deren auf Silica, Aluminiumoxid oder Aktivkohle oder ähnlichen Trägermaterialien immobilisierten Derivaten.

Bevorzugt kann die Hydrosilylierung mit Hilfe von mindestens einem Platinkomplex durchgeführt werden, wie vorzugsweise cis-$(NH_3)_2PtCl_2$ (sogenanntes Cis-Platin) und/oder Di-$\mu$-[chloro-bis chloro(cyclohexen)platin(II)].

Besonders bevorzugt kann die Hydrosilylierung mit mindestens einem Komplex des nullwertigen Platins, wie zum Beispiel [Tris(divinyltetramethyldisiloxan)bis-platin(0)] (Karstedt-Katalysator), durchgeführt werden.

Ganz besonders bevorzugt kann die Hydrosilylierung in Gegenwart mindestens eines Platin(0)-Komplexkatalysators durchgeführt werden, der vor der Zugabe in das Reaktionsmedium in einem Lösemittel gelöst und dessen Lösung mit mindestens einem ungesättigten Kohlenwasserstoff mit 2 bis 6 C-Atomen versetzt wurde, vorzugsweise gemäß der Lehre der EP 1520870 A1.

Die Katalysatormenge wird vorzugsweise so bemessen, dass die Gesamtkonzentration an Edelmetall, vorzugsweise Platin, 1 bis 100 wppm (Gewichts-ppm), bevorzugt 2 bis 10 wppm bezogen auf das gesamte Reaktionsgemisch beträgt.

Für den Fachmann ersichtlich, wird die minimale Edelmetallkonzentration, vorzugsweise Platinkonzentration

bevorzugt so gewählt, dass sie eine sicher-zügige SiC-Verknüpfungsreaktion gestattet, ohne die Wirtschaftlichkeit des Verfahrens durch zu hohen Edelmetalleinsatz zu beinträchtigen oder darüber hinaus auch noch nachteilige Produktverfärbungen hervorzurufen.

Vorzugsweise kann die Hydrosilylierung bei Temperaturen zwischen 0 und 200 °C, bevorzugt zwischen 50 und 140 °C durchgeführt werden.

Der Katalysatoreinsatz kann bei der Hydrosilylierung über einen weiten Temperaturbereich erfolgen. Zur Vermeidung von Nebenreaktionen wird vorzugsweise der Temperaturbereich so niedrig gewählt, dass er einen akzeptablen Kompromiss zwischen angestrebter Produktreinheit und Produktionsleistung darstellt.

Wie bereits beschrieben, wird bei der Edelmetall-katalysierten, hydrosilylierenden Anlagerung mindestens ein ungesättigter Polyether eingesetzt.

Bevorzugte ungesättigte Polyether, die im Rahmen der Edelmetall-katalysierten, hydrosilylierenden Anlagerung einsetzbar sind, sind vorzugsweise solche, die der Formel (I) entsprechen:

$$A[-O\ -(CH_2-CH_2-O-)_n-(CH_2-CH(CH_3)-O-)_o-Z] \qquad (I),$$

hierin ist

- A ein olefinisch ungesättigter, mindestens zwei Kohlenstoffatome, bevorzugt mindestens drei Kohlenstoffatome aufweisender organischer Rest einer organischen Startverbindung zur Bereitung des Polyethers,
- Z entweder Wasserstoff, Methyl-, Ethyl-, Propyl-, oder Butyl- ,
- n gleich 0 bis zu 50, bevorzugt 9 bis zu 30, besonders bevorzugt 10 bis zu 22,
- o gleich 0 bis zu 50, bevorzugt 1 bis zu 20, besonders bevorzugt 2 bis zu 13,

mit der Maßgabe, dass die Summe aus n und o gleich oder größer als 1 ist und mit der Maßgabe, dass der nach Guo für den ungesättigten Polyether errechnete HLB-Wert > 9,0 ist.

Die hier wiedergegebenen Indexzahlen und die Wertbereiche der angegebenen Indizes können vorzugsweise als Mittelwerte (Gewichtsmittel) der möglichen statistischen Verteilung der tatsächlichen vorhandenen Strukturen und/oder deren Mischungen verstanden werden. Dies gilt vorzugsweise auch für als solche an sich exakt wiedergegebene Strukturformeln, wie beispielsweise für Formel (I).

Die mit n und o bezeichneten Einheiten können wahlweise statistisch gemischt oder auch blockweise in der Kette enthalten sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können.

Die ungesättigten Polyether können vorzugsweise über aus dem Stand der Technik bekannte Alkoxylierungsreaktionen hergestellt werden. Als Monomere in der Alkoxylierungsreaktion können bevorzugt Ethylenoxid und/oder Propylenoxid eingesetzt werden sowie beliebige Mischungen dieser Epoxide. Die Monomere können in reiner Form oder gemischt eingesetzt werden. Die Zusammenhänge zwischen Dosierung und Produktstruktur sind dem Fachmann bekannt.

Besonders bevorzugt sind die Polyether der Formel (I), die eine gewichtsmittlere Molmasse von 76 bis 6.000 g/mol, bevorzugt von 100 bis 4.000 g/mol und besonders bevorzugt von 200 bis 2.000 g/mol aufweisen.

Als Startverbindung für die Alkoxylierungsreaktion können vorzugsweise alle Verbindungen der Formel (II)

$$A[-OH] \qquad (II)$$

verwendet werden. Die Verbindungen der Formel (II) weisen eine Hydroxylgruppe und A = olefinisch ungesättigter, organischer Rest auf (wie oben definiert). Der olefinisch ungesättige, organische Rest weist mindestens zwei Kohlenstoffatome, bevorzugt mindestens drei Kohlenstoffatome auf. Unter Startverbindungen werden im Rahmen der vorliegenden Erfindung Substanzen verstanden, die den Anfang (Start) des herzustellenden Polyethers oder Alkoxylierungsproduktes bilden, das durch die Anlagerung von Alkylenoxiden erhalten wird. Die Startverbindung ist vorzugsweise ausgewählt aus der Gruppe der olefinisch ungesättigten Alkohole. Bevorzugt wird als Startverbindung enthaltend die Gruppe A ein einwertiger olefinisch ungesättiger Alkohol verwendet.

Besonders bevorzugt sind die Reste, die sich von Allylalkohol, 1-Hexenol, Methallylalkohol, Vinylalkohol und Vinyloxybutanol, ableiten, wobei der vom Allylalkohol stammende Rest besonders bevorzugt ist.

Im Rahmen der erfindungsgemäßen Lehre sind bevorzugt einsetzbare ungesättigte Polyether vorzugsweise Ethylenoxid- und/oder Propylenoxid-Derivate der genannten ungesättigten Alkohole und können neben den nur von Ethylenoxid (EO)- abgeleiteten Homopolymer-Strukturen auch die EO-/PO-Mischderivate umfassen, die einen HLB-Wert > 9,0 aufweisen.

Die Hydrosilylierung als solche ist dem Fachmann an sich aus dem Stand der Technik wohlbekannt, vgl. zum Beispiel das Buch "Chemie und Technologie der Silicone", Verlag Chemie, 1960, Seite 43, sowie zum Beispiel US 3,775,452 und EP 1 520 870 A1.

Die erfindungsgemäß erhältlichen säurefreien Wasserstoffsiloxanäquilibrate sind vorzugsweise stabile, klare und farblose Flüssigkeiten, die bevorzugt keine oder zumindest nur geringe Anteile an flüchtigen niedermolekularen Verbindungen enthalten.

Erstaunlicherweise ermöglicht die vorliegende Erfindung es, die erfindungsgemäßen Wasserstoffsiloxanäquilibrate unter weitestgehendem Erhalt der SiH-Funktionalität herzustellen, was sich z.B. aus dem Vergleich der zuvor im Eduktgemisch eingewogenen SiH-Äquivalente zu denjenigen SiH-Äquivalenten ergibt, die man analytisch in dem nach dem erfindungsgemäßen Verfahren hergestellten Wasserstoffsiloxan bestimmen kann.

Die gemessenen SiH-Äquivalente sind innerhalb der Analysengenauigkeit vorzugsweise übereinstimmend, was den weitestgehenden Erhalt der eingesetzten SiH-Funktion belegen kann.

Erfindungsgemäß ist es bevorzugt, dass die Differenz zwischen dem Ausgangs-SiH-Gehalt der gesamt eingesetzten Siloxane, das heißt, dem vor der Äquilibrierung gasvolumetrisch bestimmbaren SiH-Gehalt und dem End-SiH-Gehalt, das heißt, dem nach Äquilibrierung gasvolumetrisch bestimmbaren Gehalt an Silizium-gebundenem Wasserstoff $\leq 2$ Prozent beträgt.

Die erfindungsgemäßen Wasserstoffsiloxane sind säurefrei, was im Rahmen der hier vorliegenden Erfindung vorzugsweise einer messbaren Azidität von $\leq 2$ ppm, das heißt $\leq 2$ mg KOH pro kg Probe entspricht, vorzugsweise gemessen durch eine Endpunkttitration, bei der 30 g der jeweiligen Probe in einem Titrationsbecher auf 0,1 mg genau eingewogen, sodann in ca. 100 ml Ethanol gelöst und mit 0,1 prozentiger Bromphenolblaulösung versetzt werden. Die dabei entstehende, gelb gefärbte Lösung wird an einem Titroprozessor (z.B. der Fa. Metrohm) gegen 0,02 molare ethanolische KOH titriert. Der dabei zu verzeichnende Farbumschlag (nach intensiv Blau) kennzeichnet das Titrationsende. Unter Berücksichtigung des Verbrauchs an ethanolischer Kaliumhydroxidlösung und der Einwaage kann dann die Säurezahl berechnet werden.

Das erfindungsgemäß eingesetzte, makrovernetzte, wasserhaltige und Sulfonsäuregruppen enthaltende Kationenaustauscherharz ist nach Abtrennung des jeweiligen Siloxanäquilibrats vorzugsweise für die weitere Verwendung als Äquilibrierkatalysator geeignet.

Wie bereits zuvor beschrieben, lässt man in dem erfindungsgemäßen Verfahren zur Herstellung säurefreier Wasserstoffsiloxanäquilibrate die Siloxanmischung unter Umlagerung der SiOSi-Bindungen solange reagieren, bis dass das auf diese Weise hergestellte säurefreie Wasserstoffsiloxanäquilibrat bei einer Edelmetall-katalysierten, hydrosilylierenden Anlagerung an mindestens einen ungesättigten Polyether, der einen nach der Guo'schen Inkrementmethode errechneten, arithmetisch gemittelten HLB-Wert >9,0 aufweist, ein bei T = 25°C klares Anlagerungsprodukt liefert.

Die Klarheit des Anlagerungsproduktes stellt dabei eine so einfache wie hervorragende Möglichkeit zur Beurteilung der Äquilibratqualität des Wasserstoffsiloxans dar, wie im weiter unten folgenden Beispielteil ersichtlich wird. Sogar die sonst häufig zur Beurteilung der Qualität von Siloxanäquilibraten genutzte, gaschromatographische Analyse erreicht hier ihre Grenzen, wie ebenfalls im weiter unten folgenden Beispielteil ersichtlich wird.

Erfindungsgemäß wird ein makrovernetztes, wasserhaltiges und Sulfonsäuregruppen enthaltenden Kationenaustauscherharz eingesetzt. Es weist einen Wassergehalt von 6 bis 16 Gewichtsprozent, vorzugsweise 8 bis 12 Gewichtsprozent bezogen auf das Gewicht des Kationenaustauscherharzes auf. Es kann bevorzugt sein, das Reaktandensystem, d.h. die Mischung umfassend mindestens zwei verschiedenen Siloxane, die zusammen betrachtet über Dimethylhydrogensiloxygruppen, Methylhydrogensiloxygruppen, Dimethylsiloxygruppen sowie vorzugsweise über Trimethylsiloxygruppen verfügen, mit definierten Mengen an Wasser zu versetzen, um z.B. einer möglichen Wasserverarmung des sulfonsauren Kationenaustauscherharzes zu begegnen.

Die folgenden Beispiele dienen allein zur weiteren Erläuterung der vorliegenden Erfindung und stellen keinerlei Beschränkung der vorliegenden Erfindung dar.

**Beispiele:**

Im folgenden Beispielteil werden nur die erfindungsgemäß klare Polyethersiloxane liefernden Wasserstoffsiloxane (SiH-Siloxane) als "Wasserstoffsiloxanäquilibrat" bezeichnet. Alle anderen Produkte werden im folgenden Beispielteil mit dem Begriff "Wasserstoffsiloxan" bezeichnet.

Sofern nicht explizit anders angegeben, sind alle Prozentangaben als Gewichtsprozente zu verstehen.

Die Wasserbestimmung in den sulfonsauren Kationenaustauscherharzen erfolgte nach Karl Fischer in Anlehnung an DIN 51777, DGF E-III 10 und DGF C-III 13a.

Die Bestimmung der Säurezahlen in den Wasserstoffsiloxanäquilibraten bzw. Wasserstoffsiloxanen erfolgte durch eine Endpunkttitration in Form einer Doppelbestimmung, bei der 30 g der jeweiligen Probe in einem Titrationsbecher auf 0,1 mg genau eingewogen, sodann in ca. 100 ml Ethanol gelöst und mit 0,1 prozentiger Bromphenolblaulösung versetzt wurden. Die dabei entstandene, gelb gefärbte Lösung wurde an einem Titroprozessor (Fa. Metrohm) gegen eine

0,02 molare ethanolische KOH-Lösung titriert. Der dabei zu verzeichnende Farbumschlag (nach intensiv Blau) kennzeichnete das Titrationsende. Unter Berücksichtigung des Verbrauchs an ethanolischer Kaliumhydroxidlösung und der Probeneinwaage wurde dann die Säurezahl berechnet.

Es wird von den Erfindern darauf hingewiesen, dass die Polyethersiloxane, die wie im weiter unten folgenden Teil beschrieben, unter Verwendung von Amberlyst®15 (mittlerer Porendurchmesser 25 nm, Oberfläche 45 $m^2/g$) (Beispiel 4) oder Purolite® CT 169d (mittlerer Porendurchmesser 24,0 - 42,5 nm, Oberfläche 35-50 $m^2/g$) (Beispiel 5) als Kationenaustauscherharzen hergestellt wurden, trübe Flüssigkeiten sind. Wichtige Parameter zur Beschreibung der erfindungsgemäß einzusetzenden Katalysatorphasen sind also die spezifische Oberfläche und die Porosität, d. h. der mittlere Porendurchmesser. Bildet man aus beiden Größen ein Produkt, so hat dieses den Charakter einer inversen Dichte (Volumen: Masse) und erlaubt eine saubere Differenzierung der prinzipiell funktionsfähigen von nichterfindungsgemäß einzusetzenden Ionenaustauschern.

Das erfindungsgemäße Beispiel 1 macht Gebrauch von Lewatit® K 2621, einem sulfonsauren, makroporösen Kationenaustauscherharz mit einem mittleren Porendurchmesser von 65 nm und einer spezifischen Oberfläche von 40 $m^2/g$ mit einer Wasserbeladung von 11,6 Gewichtsprozent und führt zu einem erfindungsgemäßen Wasserstoffsiloxanäquilibrat.

Das nichterfindungsgemäße Beispiel 2 macht ebenfalls Gebrauch von Lewatit® K 2621, wobei jedoch dort ein Kationenaustauscherharz mit einer Ausgangswasserbeladung von 11,6 Gewichtsprozent durch anschließende chemische Trocknung auf einen nichterfindungsgemäßen Wassergehalt von 3,2 Gewichtsprozent eingestellt wurde. Aus der Verwendung dieses Kationenaustauscherharzes resultiert ein nicht erfindungsgemäßes Wasserstoffsiloxan, welches nach Hydrosilylierung zum Polyethersiloxan ein trübes Produkt liefert.

Sogar die sonst häufig zur Beurteilung der Qualität von Siloxanäquilibraten genutzte, gaschromatographische Analyse erreicht hier ihre Grenzen, wie weiter unten folgend die Vergleiche der in den 5 Wasserstoffsiloxanen gemessenen Siloxanzyklen-Konzentrationen belegen (siehe Beispiele 1 bis 5); die $D_4$-, $D_5$- und $D_6$-Konzentrationen der Proben differieren - mit Ausnahme des Beispiels 4 - nur minimal und erlauben somit keinerlei Rückschluss auf die Verwendungsfähigkeit des jeweiligen Wasserstoffsiloxans.

**Vorbereitung der zur SiOSi-Umlagerung eingesetzten Kationenaustauscherharze**

Die sulfonsauren Kationenaustauscherharze Lewatit® K 2621 (Beispiel 1), Amberlyst®15 (Beispiel 4) und Purolite® CT169d (Beispiel 5) wurden jeweils in einer offenen Abdampfschale in einen auf 60°C beheizten Trockenschrank gestellt und dann, in noch warmen Zustand in inertisierte Gefäße unter Feuchtigkeitsausschluß überführt und aufbewahrt.

Das in Beispiel 2 benutzte sulfonsaure Kationenaustauscherharz Lewatit® K 2621 mit ursprünglich 11,6 Gewichtsprozent Wassergehalt wurde durch anschließende chemische Trocknung, das heißt durch Umsetzung mit Trimethylchlorsilan gemäß folgender Reaktionsgleichung:

$$2\ (CH_3)_3SiCl + H_2O \rightarrow (CH_3)_3Si\text{-}O\text{-}Si(CH_3)_3 + 2HCl$$

auf einen Wassergehalt von 3,2 Gewichtsprozent eingestellt. Hierzu wurde unter Stickstoffinertisierung das sulfonsaure Kationenaustauscherharz (Lewatit® K 2621) intensiv mit Trimethylchlorsilan in einem Kolben am Rotationsverdampfer für eine Stunde bei 22°C unter Rühren kontaktiert. Durch Anlegen eines Hilfsvakuums (Ölpumpenvakuum von 5 mbar) wurden dann die Flüchtigen abgezogen und das so chemisch vorgetrocknete Kationenaustauscherharz isoliert und ebenfalls unter Feuchtigkeitsausschluß aufbewahrt.

**Beispiel 1 (erfindungsgemäß)**

38,5 g eines $\alpha,\omega$-Dihydrogenpolydimethylsiloxans (mittlere Kettenlänge gasvolumetrisch bestimmt N = 9,82) wurden zusammen mit 37,6 g eines mit Trimethylsiloxygruppen endverschlossenen Poly(methylhydrogen)siloxans (mittlere Kettenlänge gasvolumetrisch bestimmt N = 42,9) und 173,9 g Dekamethylcyclopentasiloxan ($D_5$) in einem 500-ml-Vierhalsrundkolben mit KPG-Rührer, Innenthermometer und aufgesetztem Rückflusskühler unter Rühren vorgelegt. Aus einer eingewogenen Probe dieser Mischung bestimmte man den Ausgangs-SiH-Gehalt zu 2,790 Val SiH/kg gasvolumetrisch an einer Gasbürette (Zersetzung mit einer butanolischen Natriumbutylatlösung). Die Siloxanmischung wurde dann mit 6 Gewichtsprozent (bezogen auf die Gesamtmasse an Siloxan) eines bei 60°C im Wärmeschrank getrockneten sulfonsauren, makroporösen Kationenaustauscherharzes (Lewatit®K 2621, mittlerer Porendurchmesser 65 nm, Oberfläche 40 $m^2/g$) beaufschlagt. Der nach Karl-Fischer-Titration bestimmte Wassergehalt des vorgetrockneten Harzes betrug 11,6 Gewichtsprozent. Unter Stickstoffinertisierung erwärmte man den Reaktionsansatz für 6 Stunden auf 40°C. Danach wurde das sulfonsaure Harz durch Filtration abgetrennt und das äquilibrierte Wasserstoffsiloxan als farblose, klare Flüssigkeit isoliert.

In Wiederholung der vor Beginn der Reaktion durchgeführten Gasvolumetrie wurde aus einem eingewogenen Aliquot des Wasserstoffsiloxanäquilibrats der End-SiH-Gehalt gasvolumetrisch an einer Gasbürette (Zersetzung mit einer butanolischen Natriumbutylatlösung) bestimmt. Im Rahmen der Messgenauigkeit entsprach der End-SiH-Wert dem Ausgangs-SiH-Wert von 2,790 Val SiH/kg. Eine begleitende gaschromatographische Analyse zeigte für die im Wasserstoffsiloxanäquilibrat vertretenen Siloxanzyklengehalte: Da = 2,0 %, $D_5$ = 1,1 % und $D_6$ = 0,32 %.

Die Bestimmung der im Wasserstoffsiloxanäquilibrat vorliegenden Restazidität gemäß der Säurezahl lieferte einen Wert < 2ppm.

Beispiel 2 (nicht erfindungsgemäß)

**Einsatz eines chemisch vorgetrockneten Kationenaustauscherharzes mit 3,2 Gewichtsprozent Wasser**

38,5 g eines α,ω-Dihydrogenpolydimethylsiloxans (mittlere Kettenlänge gasvolumetrisch bestimmt N = 9,82) wurden zusammen mit 37,6 g eines mit Trimethylsiloxygruppen endverschlossenen Poly(methylhydrogen)siloxans (mittlere Kettenlänge gasvolumetrisch bestimmt N = 42,9) und 173,9 g Dekamethylcyclopentasiloxan ($D_5$) in einem 500-ml-Vierhalsrundkolben mit KPG-Rührer, Innenthermometer und aufgesetztem Rückflusskühler unter Rühren vorgelegt. Aus einem eingewogenen Aliquot dieser Mischung bestimmte man den Ausgangs-SiH-Gehalt zu 2,790 Val SiH/kg gasvolumetrisch an einer Gasbürette (Zersetzung mit einer butanolischen Natriumbutylatlösung). Die Siloxanmischung wurde dann mit 6 Gewichts-% (bezogen auf die Gesamtmasse an Siloxan) eines auf 3,2 Gewichtsprozent Wassergehalt (Karl-Fischer-Titration) chemisch vorgetrockneten sulfonsauren, makroporösen Kationenaustauscherharzes (Lewatit® K 2621, mittlerer Porendurchmesser 65 nm, Oberfläche 40 $m^2$/g) beaufschlagt. Unter Stickstoffinertisierung erwärmte man den Reaktionsansatz für 6 Stunden auf 40°C. Danach wurde das sulfonsaure Harz durch Filtration abgetrennt und das Wasserstoffsiloxan als farblose, klare Flüssigkeit isoliert.

In Wiederholung der vor Beginn der Reaktion durchgeführten Gasvolumetrie wurde aus einem eingewogenen Aliquot des Wasserstoffsiloxans der End-SiH-Gehalt gasvolumetrisch an einer Gasbürette (Zersetzung mit einer butanolischen Natriumbutylatlösung) bestimmt. Im Rahmen der Messgenauigkeit entsprach der End-SiH-Wert dem Ausgangs-SiH-Wert von 2,790 Val SiH/kg. Eine begleitende gaschromatographische Analyse wies den im Wasserstoffsiloxan vertretenen Siloxanzyklen Gehalte von $D_4$ = 1,9 %, $D_5$ = 1,2 % und $D_6$ = 0,31 % zu.

Die Bestimmung der im Wasserstoffsiloxan vorliegenden Restazidität gemäß der Säurezahl lieferte einen Wert < 2ppm.

**Beispiel 3 (nicht erfindungsgemäßes Referenzbeispiel)**

**Einsatz von Trifluormethansulfonsäure als Äquilibrierungskatalysator**

38,5 g eines α,ω-Dihydrogenpolydimethylsiloxans (mittlere Kettenlänge gasvolumetrisch bestimmt N = 9,82) wurden zusammen mit 37,6 g eines mit Trimethylsiloxygruppen endverschlossenen Poly(methylhydrogen)siloxans (mittlere Kettenlänge gasvolumetrisch bestimmt N = 42,9) und 173,9 g Dekamethylcyclopentasiloxan ($D_5$) in einem 500-ml-Vierhalsrundkolben mit KPG-Rührer, Innenthermometer und aufgesetztem Rückflusskühler unter Rühren vorgelegt. Aus einem eingewogenen Aliquot dieser Mischung bestimmte man den Ausgangs-SiH-Gehalt zu 2,790 Val SiH/kg gasvolumetrisch an einer Gasbürette (Zersetzung mit einer butanolischen Natriumbutylatlösung). Die Siloxanmischung wurde dann mit 0,1 Gewichtsprozent Trifluormethansulfonsäure (bezogen auf die Gesamtmasse an Siloxan) versetzt. Unter Stickstoffinertisierung erwärmte man den Reaktionsansatz für 6 Stunden auf 40°C. Danach fügte man 2,0 Gewichtsprozent Natriumhydrogencarbonat (bezogen auf die Gesamtmasse an Siloxan) hinzu und ließ 30 Minuten nachrühren. Dann wurde der Feststoff durch Filtration abgetrennt und das äquilibrierte Wasserstoffsiloxan als farblos, klare Flüssigkeit isoliert.

In Wiederholung der zu Beginn der Reaktion durchgeführten Gasvolumetrie wurde aus einem eingewogenen Aliquot des Wasserstoffsiloxans der End-SiH-Gehalt gasvolumetrisch an einer Gasbürette (Zersetzung mit einer butanolischen Natriumbutylatlösung) bestimmt. Im Rahmen der Messgenauigkeit entsprach der End-SiH-Wert dem Ausgangs-SiH-Wert von 2,78 Val SiH/kg.

Eine begleitende gaschromatographische Analyse bestimmte die Siloxanzyklengehalte im Wasserstoffsiloxan zu $D_4$ = 1,9 %, $D_5$ = 1,1 % und $D_6$ = 0,30 %.

Die gemäß Säurewertbestimmung ermittelte Restazidität im Wasserstoffsiloxanäquilibrat betrug 9 ppm.

**Beispiel 4 (nicht erfindungsgemäß)**

38,5 g eines α,ω-Dihydrogenpolydimethylsiloxans (mittlere Kettenlänge gasvolumetrisch bestimmt N = 9,82) wurden zusammen mit 37,6 g eines mit Trimethylsiloxygruppen endverschlossenen Poly(methylhydrogen)siloxans

(mittlere Kettenlänge gasvolumetrisch bestimmt N = 42,9) und 173,9 g Dekamethylcyclopentasiloxan ($D_5$) in einem 500-ml-Vierhalsrundkolben mit KPG-Rührer, Innenthermometer und aufgesetztem Rückflusskühler unter Rühren vorgelegt. Aus einem eingewogenen Aliquot dieser Mischung bestimmte man den Ausgangs-SiH-Gehalt zu 2,790 Val SiH/kg gasvolumetrisch an einer Gasbürette (Zersetzung mit einer butanolischen Natriumbutylatlösung). Die Siloxanmischung wurde dann mit 6 Gewichtsprozent (bezogen auf die Gesamtmasse an Siloxan) eines bei 60°C im Wärmeschrank getrockneten sulfonsauren, makroporösen Kationenaustauscherharzes (Amberlyst®15, mittlerer Porendurchmesser 25 nm, spezifische Oberfläche 45 $m^2/g$) beaufschlagt. Der nach Karl-Fischer-Titration bestimmte Wassergehalt des vorgetrockneten Harzes betrug 10 Gewichtsprozent. Unter Stickstoffinertisierung erwärmte man den Reaktionsansatz für 6 Stunden auf 40°C. Danach wurde das sulfonsaure Harz durch Filtration abgetrennt und das Wasserstoffsiloxan als farblos, klare Flüssigkeit isoliert.

In Wiederholung der zu Beginn der Reaktion durchgeführten Gasvolumetrie wurde aus einem eingewogenen Aliquot des Wasserstoffsiloxans der End-SiH-Gehalt gasvolumetrisch an einer Gasbürette (Zersetzung mit einer butanolischen Natriumbutylatlösung) bestimmt. Im Rahmen der Messgenauigkeit entsprach der End-SiH-Wert dem Ausgangs-SiH-Wert von 2,790 Val SiH/kg.

Eine begleitende gaschromatographische Analyse bestimmte die Zyklengehalte im Wasserstoffsiloxan zu $D_4$ = 3,3 %, $D_5$ = 2,3 % und $D_6$ = 0,68 %.

Die Bestimmung der im Wasserstoffsiloxan vorliegenden Restazidität gemäß der Säurezahl lieferte einen Wert < 2ppm.

**Beispiel 5 (nicht erfindungsgemäß)**

38,5 g eines $\alpha,\omega$-Dihydrogenpolydimethylsiloxans (mittlere Kettenlänge gasvolumetrisch bestimmt N = 9,82) wurden zusammen mit 37,6 g eines mit Trimethylsiloxygruppen endverschlossenen Poly(methylhydrogen)siloxans (mittlere Kettenlänge gasvolumetrisch bestimmt N = 42,9) und 173,9 g Dekamethylcyclopentasiloxan ($D_5$) in einem 500-ml-Vierhalsrundkolben mit KPG-Rührer, Innenthermometer und aufgesetztem Rückflusskühler unter Rühren vorgelegt. Aus einem eingewogenen Aliquot dieser Mischung bestimmte man den Ausgangs-SiH-Gehalt zu 2,790 Val SiH/kg gasvolumetrisch an einer Gasbürette (Zersetzung mit einer butanolischen Natriumbutylatlösung). Die Siloxanmischung wird dann mit 6 Gewichts-% (bezogen auf die Gesamtmasse an Siloxan) eines bei 60°C im Wärmeschrank getrockneten sulfonsauren, makroporösen Kationenaustauscherharzes (Purolite® CT169d, mittlerer Porendurchmesser 24,0 - 42,5 nm, spezifische Oberfläche 35-50 $m^2/g$) beaufschlagt. Der nach Karl-Fischer-Titration bestimmte Wassergehalt des vorgetrockneten Harzes beträgt 13,1 Gewichtsprozent. Unter Stickstoffinertisierung erwärmte man den Reaktionsansatz für 6 Stunden auf 40°C. Danach wurde das sulfonsaure Harz durch Filtration abgetrennt und das Wasserstoffsiloxan als farblos, klare Flüssigkeit isoliert.

In Wiederholung der zu Beginn der Reaktion durchgeführten Gasvolumetrie wurde aus einem eingewogenen Aliquot des Wasserstoffsiloxans der End-SiH-Gehalt gasvolumetrisch an einer Gasbürette (Zersetzung mit einer butanolischen Natriumbutylatlösung) bestimmt. Der End-SiH-Wert lag bei 2,70 Val SiH/kg.

Eine begleitende gaschromatographische Analyse bestimmte die Zyklengehalte im Wasserstoffsiloxan zu $D_4$ = 1,8 %, $D_5$ = 1,0 % und $D_6$ = 0,30 %.

Die Bestimmung der im Wasserstoffsiloxan vorliegenden Restazidität gemäß der Säurezahl lieferte einen Wert < 2ppm.

**Umsetzung der in Beispielen 1 bis 5 isolierten Wasserstoffsiloxanäquilibrate bzw. Wasserstoffsiloxane zu den Polyethersiloxanen A bis E**

Allgemeine Vorgehensweise

60 g des jeweiligen Wasserstoffsiloxanäquilibrats bzw. Wasserstoffsiloxans wurden jeweils zusammen mit einem Polyethergemisch bestehend aus 38,8 g eines Allylalkohol gestarteten, hydroxyfunktionellen Poly(ethylenoxy) poly(propenyloxy)ethers mit einer Molmasse von 615 g/ mol und einem Propylenoxid-Anteil von 20% (berechneter HLB-Wert nach Guo = 11,11) und 168,4 g eines Allylalkohol gestarteten, hydroxyfunktionellen Poly(ethylenoxy)poly(propenyloxy)ethers mit einer Molmasse von 1144 g/ mol und einem Propylenoxid-Anteil von 39% (berechneter HLB-Wert nach Guo = 11,75) bei 90°C in einem 500-ml-Vierhalsrundkolben mit KPG-Rührer und aufgesetztem Rückflusskühler unter Rühren vorgelegt. Die anfänglich zweiphasig und trübe Reaktionsmischung wird dann mit 10ppm Platin in Form des pulverförmigen cis-$PtCl_2(NH_3)_2$-Komplexes versetzt. Der arithmetisch gemittelte HLB-Wert nach Guo beträgt für das eingesetzte Polyethergemisch 11,56.

Unter leichter Exothermie erfolgte die hydrosilylierende SiC-Verknüpfung zum Polyethersiloxan. Alle Ansätze ließ man über einen Zeitraum von 150 Minuten laufen. Nach dieser Zeit wurden aus allen Ansätzen Proben für die Bestimmung des gasvolumetrischen SiH-Umsatzes an einer Gasbürette entnommen (Zersetzung mit einer butanolischen Natriumbutylatlösung). Alle Ansätze erreichten quantitativen SiH-Umsatz.

Bei Reaktionstemperatur erreichten die Ansätze unter Einbringung der aus Beispiel 1 und Beispiel 3 stammenden Wasserstoffsiloxanäquilibrate (Polyethersiloxane A und C) bereits nach 45 Minuten (Polyethersiloxan A) bzw. nach 50 Minuten (Polyethersiloxan C) ihren Klarpunkt. Der Ansatz unter Verwendung des aus dem nichterfinderischen Beispiel 2 stammenden Wasserstoffsiloxans (Polyethersiloxan B) blieb hingegen auch nach 150 Minuten Reaktionszeit trübe.

Ebenfalls blieben die Ansätze unter Verwendung der aus den Beispielen 4 und 5 stammenden Wasserstoffsiloxane (Polyethersiloxane D und E) bei Reaktionstemperatur selbst nach 150 Minuten Reaktionszeit trübe.

Zum Begriff des Klarpunktes

Die Umsetzungen der SiH-Siloxane, umfassend Wasserstoffsiloxanäquilibrate bzw. Wasserstoffsiloxane mit ungesättigten Polyethern zu Polyethersiloxanen (Hydrosilylierung) beginnen aufgrund der Inkompatibilität der Reaktanden zweiphasig.

Mit der im Reaktionsverlauf steigenden Produktkonzentration sinkt die Konzentration inkompatibler Edukte und zugleich wirkt das Siliconpolyether-Copolymer als Tensid, das an der Phasengrenze die Dispergierung verbliebener inkompatibler Edukttröpfchen speziell von SiH-Siloxanen und auch den partiell umgesetzten SiH-Siloxanen in der Polyethermatrix fördert. Der bei der SiC-verknüpfenden Herstellung von Siliconpolyethern beobachtbare Klarpunkt bei Reaktionstemperatur ist Indikator und Konsequenz dieser im Reaktionssystem zunehmend stattfindenden Phasendispergierung. Am Klarpunkt hat der Durchmesser der individuellen Tröpfchen der inkompatiblen dispergierten Phase die Wellenlänge sichtbaren Lichts unterschritten und die zuvor trübe Reaktionsmatrix erscheint als eine homogene, klare Phase.

Bei 25°C wurden Proben der zu beurteilenden Polyethersiloxane A bis E mit einer Schichtdicke von ca. 10 mm jeweils in Probengläser mit flachem Boden gefüllt und diese wurde dann auf ein in der Schriftart Arial 12 in schwarzer Schrift bedrucktes, weißes Blatt Papier gestellt und danach wurde jeweils durch das befüllte Glas hindurch der gedruckte Text gelesen. Wenn das Ablesen des Textes ohne Mühe und ohne wahrnehmbare Verzerrung gelang, so waren das Polyethersiloxan als klar und damit das zur Hydrosilylierung eingesetzte Wasserstoffsiloxan als erfindungsgemäß einwandfrei äquilibriert zu beurteilen.

**Optische Bewertung der Polyethersiloxane A bis E**

| | | |
|---|---|---|
| Polyethersiloxan A | Umsetzung aus Beispiel 1 | klar |
| Polyethersiloxan B | Umsetzung aus Beispiel 2 | trübe |
| Polyethersiloxan C | Umsetzung aus Beispiel 3 | klar |
| Polyethersiloxan D | Umsetzung aus Beispiel 4 | trübe |
| Polyethersiloxan E | Umsetzung aus Beispiel 5 | trübe |

**Patentansprüche**

1. Verfahren zur Herstellung säurefreier Wasserstoffsiloxanäquilibrate folgender mittlerer Strukturformel:

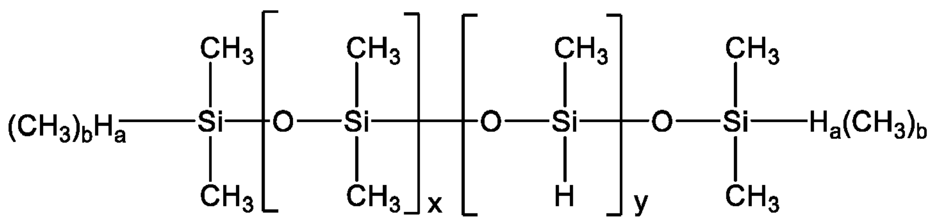

mit

$3 \leq x \leq 100$, bevorzugt $30 \leq x \leq 80$,
$1 \leq y \leq 30$, bevorzugt $2 \leq y \leq 10$,

$0,4 \leq a \leq 1,0$ bevorzugt $0,6 \leq a \leq 0,95$
$0 \leq b \leq 0,6$, bevorzugt $0,05 \leq b \leq 0,4$

$$a + b = 1$$

besonders bevorzugt ist $x + y + 2 \geq 13$,
**dadurch gekennzeichnet,**
**dass** man eine Mischung umfassend mindestens zwei verschiedene Siloxane, die zusammen betrachtet über Dimethylhydrogensiloxygruppen, Methylhydrogensiloxygruppen, Dimethylsiloxygruppen sowie vorzugsweise über Trimethylsiloxygruppen verfügen,
mit einem makrovernetzten, wasserhaltigen und Sulfonsäuregruppen enthaltenden Kationenaustauscherharz in Kontakt bringt und unter Umlagerung der SiOSi-Bindungen solange reagieren lässt, bis dass das auf diese Weise hergestellte säurefreie Wasserstoffsiloxanäquilibrat bei einer Edelmetall-katalysierten, hydrosilylierenden Anlagerung an mindestens einen ungesättigten Polyether, der einen nach der Guo'schen Inkrementmethode errechneten, arithmetisch gemittelten HLB-Wert >9,0 aufweist, ein bei T = 25°C klares Anlagerungsprodukt liefert,
wobei man die Umlagerung der SiOSi-Bindungen im Temperaturbereich von 10 bis 50°C, vornimmt,
mit der Maßgabe, dass das makrovernetzte, wasserhaltige und Sulfonsäuregruppen enthaltende Kationenaustauscherharz dadurch charakterisiert ist, dass das Produkt P aus dessen spezifischer Oberfläche und dessen mittlerem Porendurchmesser $P \geq 2,2 \times 10^{-3} m^3/kg$ und die spezifische Oberfläche $A \geq 35\ m^2/g$ betragen und dass es zudem einen Wassergehalt von 6 bis 16 Gewichtsprozent bezogen auf das Gewicht des Kationenaustauscherharzes aufweist.

2. Verfahren nach Anspruch 1, **dadurch gekennzeichnet, dass** man die Umlagerung der SiOSi-Bindungen im Temperaturbereich von 30°C bis 40°C vornimmt.

3. Verfahren nach einem der Ansprüche 1 oder 2, **dadurch gekennzeichnet, dass** man die die Umlagerung der SiOSi-Bindungen in einem Zeitraum von 4 bis 10 Stunden, bevorzugt 5 bis 8 Stunden durchführt.

4. Verfahren nach einem der Ansprüche 1 bis 3, **dadurch gekennzeichnet, dass** man während des Verfahrens zur Herstellung säurefreier Wasserstoffsiloxanäquilibrate eine Probe des zu beurteilenden Wasserstoffsiloxans aus dem Reaktionsgemisch entnimmt, und diese unter den Bedingungen einer Edelmetall-katalysierten Hydrosilylierung mit mindestens einem ungesättigten Polyether, der einen nach der Guo'schen Inkrementmethode errechneten, arithmetisch gemittelten HLB-Wert >9,0 aufweist, umsetzt und nach visueller Überprüfung der Klarheit des erhaltenen Anlagerungsproduktes entscheidet, ob das Verfahren zur Herstellung säurefreier Wasserstoffsiloxanäquilibrate beendet werden kann.

5. Verfahren nach einem der Ansprüche 1 bis 4, **dadurch gekennzeichnet, dass** zur Beendigung des Verfahrens zur Herstellung säurefreier Wasserstoffsiloxanäquilibrate das in-Kontakt-bringen des Reaktionsgemisches mit dem makrovernetzten, wasserhaltigen und Sulfonsäuregruppen enthaltenden Kationenaustauscherharz unterbrochen wird.

6. Verfahren nach einem der Ansprüche 1 bis 5, **dadurch gekennzeichnet, dass** der mindestens eine ungesättigte Polyether der Formel (I) genügt:

$$A[\text{-O -}(CH_2\text{-}CH_2\text{-}O\text{-})_n\text{-}(CH_2\text{-}CH(CH_3)\text{-}O\text{-})_o\text{-}Z] \qquad (I),$$

wobei

A ein olefinisch ungesättigter, mindestens zwei Kohlenstoffatome, bevorzugt mindestens drei Kohlenstoffatome aufweisender organischer Rest einer organischen Startverbindung zur Bereitung des Polyethers,
Z entweder Wasserstoff, Methyl-, Ethyl-, Propyl- oder Butyl- ist,
n gleich 0 bis zu 50, bevorzugt 9 bis zu 30, besonders bevorzugt 10 bis zu 22 ist,
o gleich 0 bis zu 50, bevorzugt 1 bis zu 20, besonders bevorzugt 2 bis zu 13 ist,

mit der Maßgabe, dass die Summe aus n und o gleich oder größer als 1 ist und dass der mit der Guo'schen Inkrementmethode errechnete HLB-Wert > 9,0 ist.

7. Verfahren nach einem der Ansprüche 1 bis 6, **dadurch gekennzeichnet** das makrovernetzte, wasserhaltige und Sulfonsäuregruppen enthaltende Kationenaustauscherharz einen Wassergehalt von 6 bis 16 Gewichtsprozent, bevorzugt von 8 bis 12 Gewichtsprozent bezogen auf das Gewicht des Kationenaustauscherharzes aufweist.

8. Verfahren nach einem der Ansprüche 1 bis 7, **dadurch gekennzeichnet, dass** das makrovernetzte, wasserhaltige und Sulfonsäuregruppen enthaltende Kationenaustauscherharz sich dadurch auszeichnet, dass das Produkt P aus dessen spezifischer Oberfläche und dessen mittlerem Porendurchmesser $P \geq 2{,}3 \times 10^{-3} m^3/kg$, bevorzugt $\geq 2{,}4 \times 10^{-3} m^3/kg$ ist.

9. Verfahren nach einem der Ansprüche 1 bis 8, **dadurch gekennzeichnet, dass** das makrovernetzte, wasserhaltige und Sulfonsäuregruppen enthaltende Kationenaustauscherharz einen mittleren Porendurchmesser von wenigstens 65 nm aufweist.

10. Verfahren nach einem der Ansprüche 1 bis 9, **dadurch gekennzeichnet, dass** die Mischung umfassend mindestens zwei verschiedene Siloxane, die zusammen betrachtet über Dimethylhydrogensiloxygruppen, Methylhydrogensiloxygruppen, Dimethylsiloxygruppen sowie vorzugsweise über Trimethylsiloxygruppen verfügen, mindestens ein $\alpha,\omega$-Dihydrogenpolydimethylsiloxan sowie mindestens ein Poly(methylhydrogen)siloxan, vorzugsweise mindestens ein Trimethylsiloxygruppen endverschlossenes Poly(methylhydrogen)siloxan, umfasst.

11. Verfahren nach Anspruch 10, **dadurch gekennzeichnet, dass** die Mischung zusätzlich mindestens ein cyclisches Siloxan enthält, vorzugsweise ausgewählt aus der Gruppe bestehend aus Octamethylcyclotetrasiloxan ($D_4$), Dekamethylcyclopentasiloxan ($D_5$) und Dodekamethylcyclohexasiloxan ($D_6$).

12. Verfahren nach einem der Ansprüche 1 bis 11, **dadurch gekennzeichnet, dass** die Differenz zwischen dem Ausgangs-SiH-Gehalt der gesamt eingesetzten Siloxane, das heißt, dem vor der Äquilibrierung gasvolumetrisch bestimmbaren SiH-Gehalt, und dem End-SiH-Gehalt, das heißt, dem nach Äquilibrierung gasvolumetrisch bestimmbaren Gehalt an Silizium-gebundenem Wasserstoff $\leq 2$ Prozent beträgt.

13. Verfahren nach einem der Ansprüche 1 bis 12, **dadurch gekennzeichnet, dass** die säurefreien Wasserstoffsiloxanäquilibrate eine messbare Azidität von $\leq 2$ ppm KOH pro kg, vorzugsweise bestimmbar durch eine Endpunkttitration mit ethanolischer Kaliumhydroxidlösung und Bromphenolblau-Indikator, aufweisen.

Europäisches Patentamt
European Patent Office
Office européen des brevets

# EUROPÄISCHER RECHERCHENBERICHT

Nummer der Anmeldung
EP 24 17 6573

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2023/331920 A1 (DEPIERRO MICHAEL [US] ET AL) 19. Oktober 2023 (2023-10-19)<br>* Absätze [0002], [0027] *<br>* Absatz [0030] - Absatz [0033] *<br>----- | 1-13 | INV.<br>C08G77/10<br>C08G77/12<br>C08L83/04 |
| Y | WO 2010/031654 A1 (EVONIK GOLDSCHMIDT GMBH [DE]; KNOTT WILFRIED [DE] ET AL.) 25. März 2010 (2010-03-25)<br>* Seite 1, Zeile 1 - Seite 2, Zeile 14 *<br>* Seite 15, Zeile 7 - Zeile 14 *<br>* Beispiele 1, 4 *<br>----- | 1-13 | |

RECHERCHIERTE SACHGEBIETE (IPC)
C08G
C08L

Der vorliegende Recherchenbericht wurde für alle Patentansprüche erstellt

2

| Recherchenort | Abschlußdatum der Recherche | Prüfer |
|---|---|---|
| Den Haag | 8. November 2024 | Stinchcombe, John |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 17 6573

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-11-2024

| Im Recherchenbericht angeführtes Patentdokument | Datum der Veröffentlichung | Mitglied(er) der Patentfamilie | Datum der Veröffentlichung |
|---|---|---|---|
| US 2023331920 A1 | 19-10-2023 | CN 116568729 A | 08-08-2023 |
| | | EP 4259673 A1 | 18-10-2023 |
| | | JP 2024500073 A | 04-01-2024 |
| | | US 2023331920 A1 | 19-10-2023 |
| | | WO 2022132446 A1 | 23-06-2022 |
| WO 2010031654 A1 | 25-03-2010 | CA 2737235 A1 | 25-03-2010 |
| | | CN 101676318 A | 24-03-2010 |
| | | DE 102008042181 A1 | 25-03-2010 |
| | | EP 2326683 A1 | 01-06-2011 |
| | | JP 2012503049 A | 02-02-2012 |
| | | KR 20110073424 A | 29-06-2011 |
| | | PL 2326683 T3 | 30-09-2019 |
| | | US 2011172373 A1 | 14-07-2011 |
| | | WO 2010031654 A1 | 25-03-2010 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2010031654 A1
- WO 2010074831 A1
- DE 102014211680 A1
- DE 102005001039 A1
- EP 1439200 A1
- DE 2152270 A
- EP 2628763 A1
- WO 2022132446 A1
- EP 1520870 A1
- US 3775452 A


### In der Beschreibung aufgeführte Nicht-Patentliteratur


- **G. SAUVET ; M. MOREAU ; G. HÉLARY ; E. DAUDET ; P. CANCOUET**. Functional polysiloxanes. I. Microstructure of poly-(hydrogenmethylsiloxane-co-dimethylsiloxane)s obtained by cationic copolymerization. *J. Polymer Science, Part A: Polymer Chemistry*, 2000, vol. 38, 826-36
- **P. CANCOUET ; S. PERNIN ; G. HÉLARY ; G. SAUVET**. Functional polysiloxanes. II. Neighboring effect in the hydrosilylation of poly(hydrogen-methylsiloxaneco-dimethylsiloxane)s by allylglycidylether. *J. Polymer Science, Part A: Polymer Chemistry*, 2000, vol. 38, 837-45
- **G. SAUVET et al.** *J. Polymer Science, Part A: Polymer Chemistry*, 2000, vol. 38, 826-36
- **GUO**. Calculation of hydrophile-lipophile balance for polyethoxylated surfactants by group contribution method. *J. Colloid Interface Sciences*, 2006, vol. 298, 441-450
- Chemie und Technologie der Silicone. Verlag Chemie, 1960, 43